# EUROPÄISCHE PATENTSCHRIFT

(11) **EP 0 667 831 B1**
(45) Veröffentlichungstag und Bekanntmachung des Hinweises auf die Patenterteilung: **14.05.1997**
(21) Anmeldenummer: 94926851.0
(22) Anmeldetag: 19.08.1994
(51) Int. Cl.: B65G 45/16

(54) **ABSTREIFERLEISTE FÜR BANDABSTREIFER ZUM REININGEN VON GURTBÄNDERN**
STRIPPING-OFF BAND FOR BELT CONVEYOR CLEANING STRIPPERS
BANDE DE RACLAGE POUR RACLEURS DE NETTOYAGE DE BANDES TRANSPORTEUSES

(30) Priorität: 27.08.1993 DE 9312877 U
(43) Veröffentlichungstag der Anmeldung: 23.08.1995
(73) Patentinhaber: Vulka Industrie-Vulkanisation GmbH, D-59423 Unna (DE)
(72) Erfinder: PUCHALLA, Adam, D-45768 Marl (DE)
(74) Vertreter: Patentanwälte Meinke, Dabringhaus und Partner
(86) Internationale Anmeldenummer: EP9402755
(87) Internationale Veröffentlichungsnummer: WO9505987

(56) Entgegenhaltungen:
- EP-A- 0 262 272
- DE-U- 9 312 877
- GB-A- 2 259 682

## Beschreibung

Die Erfindung richtet sich auf eine Abstreiferleiste für Bandabstreifer zum Reinigen von Gurtbändern mit einer von einem Hohlprofil gebildeten Trägerleiste und daran angebrachten, in der Reinigungslage am bewegten Gurtband anliegenden Verschleißelementen, wobei die Trägerleiste mit Einstecktaschen zur Aufnahme von an dem Verschleißelementen vorgesehenen Einsteckfüßen versehen ist, wie in der EP-A-0 262 272 beschrieben.

Ähnliche Abstreiferleisten sind in weiteren unterschiedlichen Ausführungsformen bekannt, wie beispielsweise in der DE-A-39 15 609 oder DE-U-89 03 188, DE-U-90 06 407 oder DE-U-90 11 459 oder GB-A-2 259 682 beschrieben.

Aus der DE-A-38 31 033 oder der GB-A-2 239 228 sind Abstreiferleisten bekannt, die aus einer Mehrzahl von individuell auswechselbaren Abstreiferklingen gebildet sind. Zum Auswechseln der Klingen müssen Verschraubungen oder besondere Sicherungsstifte gelöst werden, was einen vergleichsweise hohen zeitlichen Aufwand bedingt.

Aufgabe der Erfindung ist die Schaffung einer Lösung, mit der derartige Abstreiferleisten ohne großen Montageaufwand schnell ausgewechselt werden können, wobei die Abstreiferleisten sich in besonderer Weise den jeweiligen Betriebsbedingungen anpassen können.

Mit einer Abstreiferleiste der eingangs bezeichneten Art wird diese Aufgabe gemäß der Erfindung dadurch gelöst, daß die Verschleißleisten querschnittlich etwa S-förmig mit geraden Profilbereichen ausgebildet sind, wobei ein freies Ende den oder die Einsteckfüße bildet, und daß in der Einstecklage der Mittelbereich des Verschleißleistenprofiles gegenüber der Oberfläche der Trägerleiste einen von der Einstecktasche ausgehenden Winkel zur Bereitstellung eines Federbogens bildet.

Diese Ausgestaltung macht es möglich, durch Ausschlagen der Einsteckfüße verbrauchte Abstreiferleisten aus den Einstecktaschen durch Einsetzen der Füße neuer Abstreiferleisten eine sehr rasche Auswechslung vorzunehmen. Da die Abstreiferleiste durch unterschiedliche Gestaltungen an unterschiedliche Einsatzzwecke anpaßbar ist, kann auch bei geänderten Betriebsbedingungen eine noch intakte Abstreiferleiste gegen eine andere Abstreiferleiste anderer Qualität leicht ausgewechselt werden, wobei ein günstiges Federungsverhalten sichergestellt ist.

Weitere Ausgestaltungen der Abstreiferleiste ergeben sich aus den Unteransprüchen.

Um insbesondere Verschmutzungen bei derartigen Ausgestaltungen der Abstreiferleiste zu verhindern, die ggf. das Federverhalten negativ beeinflussen, kann nach der Erfindung auch eine entsprechende Schutzplatte vorgesehen sein.

Werden besonders flexible Abstreiferleisten gewünscht, kann im Inneren der Verschleißleiste ein Federblech vorgesehen sein. An dieser Stelle sei bemerkt, daß z.B. durch das DE-U-90 06 407 bekannt ist, im Inneren von Kunststoffkörpern als Verschleißleisten gelochte Tragplatten aus Stahl vorzusehen, die allerdings keinen Einfluß auf das Federverhalten der Abstreiferleiste selbst haben.

In Ausgestaltung kann auch vorgesehen sein, daß die Verschleißleiste mit einer Mehrzahl von derartigen Verschleißleisten nebeneinander angeordnet sein kann, auch dies dient der flexiblen Auswechselbarkeit, etwa dann, wenn ein Teilbereich einer Gesamtleiste zerstört wurde, kann dieser Teilbereich gemäß der Erfindung einfach ausgebildet werden.

Die Trägerleiste selbst kann auch umschlagsymmetrisch gleich ausgebildet sein, derart, daß beidseitig Verschleißleisten mittels Einsteckfüßen in Einstecktaschen angeordnet werden können, wie dies die Erfindung in weiterer Ausgestaltung ebenfalls vorsieht, wobei doppelseitig bestückte Trägerleisten für sich gesehen durch den eingangs genannten Stand der Technik bekannt sind.

Die Erfindung ist nachstehend anhand der Zeichnung beispielsweise näher erläutert. Diese zeigt
- Fig. 1: eine vereinfachte, teilweise aufgebrochene perspektivische Darstellung einer erfindungsgemäßen Abstreiferleiste sowie in den
- Fig. 2 und 3: vereinfachte Seitenansichten von abgewandelten Ausführungsbeispielen einer Abstreiferleiste.

Die allgemein mit 1 bezeichnete Abstreiferleiste wird im wesentlichen von einer Trägerleiste 2, die teilweise als Hohlprofil ausgebildet ist, gebildet und von Verschleißleisten 3, von denen in der Figur andeutungsweise zwei wiedergegeben sind.

Die Trägerleiste 2 weist wenigstens an einer Seite Einstecktaschen 4 auf, zur Aufnahme von Einsteckfüßen 5 an den Verschleißleisten 3.

Die Einstecktaschen 4 können in ihrem Bodenbereich Ausnehmungen 6 aufweisen, die teilweise gestrichelt in der Figur angedeutet sind, um ein Ausschlagen der Einsteckfüße 5 mittels eines Werkzeuges zu ermöglichen. Natürlich können die Einstecktaschen auch ohne Bodenbereich, d.h. hier vollständig geöffnet, ausgebildet sein, was dann allerdings Querstreben zum Kopfprofil der Trägerleiste notwendig macht.

Wie in der Figur angedeutet, ist jede Verschleißleiste querschnittlich etwa S-förmig ausgebildet, derart, daß sich drei Verschleißleistenbereiche ergeben, nämlich den Einsteckfüßen 5 ein abgewinkelter Mittelbereich 3a und ein im wesentlichen dem Verschleiß unterworfener Hauptbereich 3b, der wiederum zum Mittelbereich 3a abgewinkelt ist. Im Inneren kann das Innere wenigstens eines Teiles der Einsteckfüße 5 und des Mittelbereiches 3a sowie der Übergangsbereich zum Verschleißabschnitt 3b mit einem eingegossenen Federblech 7 versehen sein, was in der Figur gestrichelt angedeutet ist.

Der angewinkelte Mittelbereich 3a ist so gestaltet, daß die zur Trägerleiste gewandte Unterseite 8 einen Winkel a mit der entsprechenden Oberfläche 9 der Trägerleiste 2 bildet, derart, daß bei Belastung eine Federbewegung auf die Oberfläche 9 und von dieser weg ermöglicht wird. Um dabei im wesentlichen eine Verschmutzung dieses Teilbereiches zu verhindern, kann eine Schutzplatte 10 vorgesehen sein, die entweder einstückig am Profil ausgebildet ist oder aber mit diesem vernietet oder verschweißt ist, worauf es hier nicht näher ankommt.

Die Trägerleiste 2 kann umschlagsymmetrisch gleich gestaltet sein, d.h. beidseitig mit Einstecktaschen 4 bzw. 4a ausgerüstet sein, so daß weitere Verschleißleisten 3a einsteckbar sind, was in der Figur wiederum nur gestrichelt angedeutet ist.

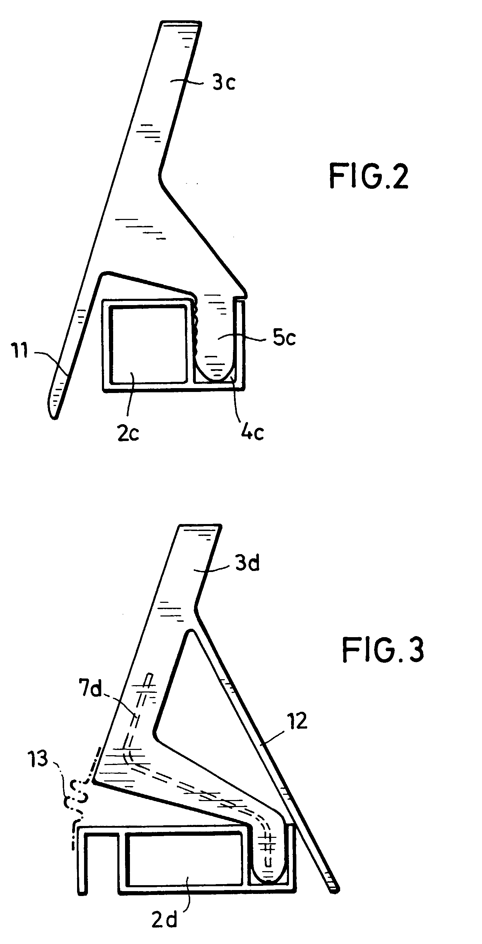

In Fig. 2 ist eine in eine Trägerleiste 2c eingesteckte Verschleißleiste 3c dargestellt, die als Verschmutzungsschutz der Trägerleiste 2c einen rückwärtigen schürzenartigen Ansatz 11 aufweist, der einstückig aus dem Material der Verschleißleiste 3 gefertigt sein kann, er kann aber auch mit der Rückseite der Verschleißleiste 3c verklebt aufvulkanisiert oder in anderer Weise dort befestigt sein. Der Einsteckfuß ist mit 5c, die Einstecktasche mit 4c bezeichnet.

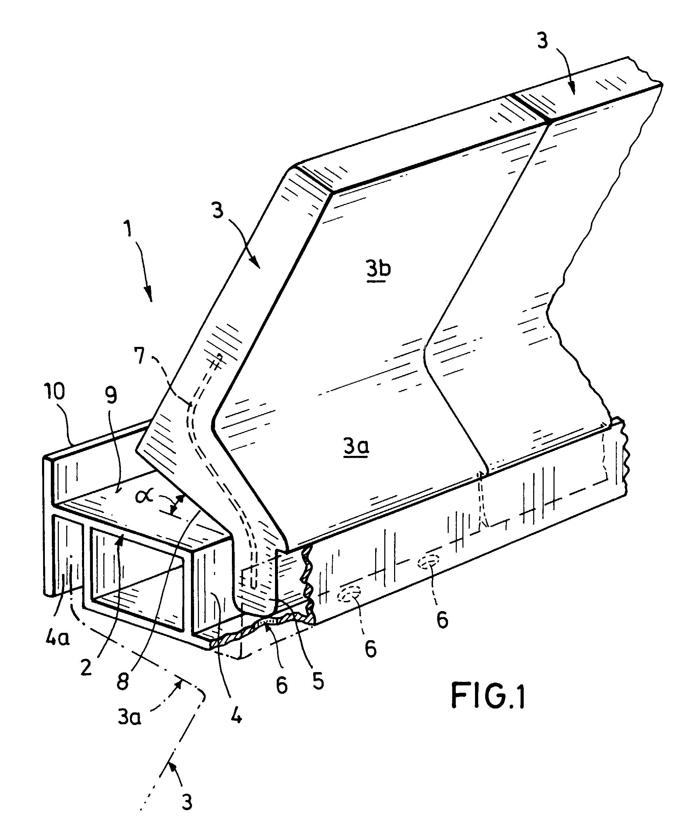

Beim Ausführungsbeispiel der Fig. 3 kann bei einer mit 3d bezeichneten Verschleißleiste, die in eine Trägerleiste 2d eingesteckt ist, eine frontseitige Schutzschürze 12 vorgesehen sein. Der rückwärtige Bereich soll mit einer dort verklebten Balgenfolie 13 oder gemäß der Ausführungsbeispiele der Fig. 1 und 2 geschützt sein, was in Fig. 3 lediglich gestrichelt angedeutet ist.

## Patentansprüche

1. Abstreiferleiste für Bandabstreifer zum Reinigen von Gurtbändern mit einer von einem Hohlprofil gebildeten Trägerleiste (2) und daran angebrachten, in der Reinigungslage am bewegten Gurtband anliegenden Verschleißelementen (3), wobei die Trägerleiste (2) mit Einstecktaschen (4) zur Aufnahme von an den Verschleißelementen (3) vorgesehenen Einsteckfüßen (5) versehen ist, dadurch gekennzeichnet, daß die Verschleißelemente (3) als querschnittlich etwa S-förmige Verschleißleisten mit geraden Profilbereichen (3b) ausgebildet sind, wobei ein freies Ende den oder die Einsteckfüße (5) bildet, und daß in der Einstecklage der Mittelbereich (3a) der Verschleißleiste (3) gegenüber der Oberfläche der Trägerleiste (2) einen von der Einstecktasche ausgehenden Winkel (α) zur Bereitstellung eines Federbogens bildet.

2. Abstreiferleiste nach Anspruch 1,
dadurch gekennzeichnet,
daß die den Einstecktaschen (4) gegenüberliegende Seite des Trägerleistenhohlprofiles eine in Richtung der Verschleißleisten (3) weisende Schutzplatte (10) aufweist.

3. Abstreiferleiste nach Anspruch 1 oder 2,
dadurch gekennzeichnet,
daß im Inneren der Verschleißleisten (3) wenigstens von den Einsteckfüßen (5) über dem mittleren Profilbereich (3a) in den Verschleißleistenbereich (3b) weisende Federbleche (7) zur Aufrechterhaltung einer Vorspannung eingebettet sind.

4. Abstreiferleiste nach einem der vorangehenden Ansprüche,
dadurch gekennzeichnet,
daß an einer Verschleißleiste (3) eine Mehrzahl von Einsteckfüßen (5) nebeneinander ausgebildet sind.

5. Abstreiferleiste nach einem der vorangehenden Ansprüche,
dadurch gekennzeichnet,
daß an einer Trägerleiste (2) eine Mehrzahl von mit Einsteckfüßen (5) ausgerüsteten Verschleißleisten (3) nebeneinander angeordnet sind.

6. Abstreiferleiste nach einem der vorangehenden Ansprüche,
dadurch gekennzeichnet,
daß die Trägerleiste (2) umschlagsymmetrisch gleich ausgebildet ist mit Einstecktaschen (4,4a) an zwei gegenüberliegenden Längsseiten.

7. Abstreiferleiste nach einem der vorangehenden Ansprüche,
dadurch gekennzeichnet,
daß die Verschleißleisten (3c,3d) mit rückseitigen und/oder frontseitigen Schutzschürzen (11 bzw. 12) versehen sind.

## Claims

1. Stripping edge for belt scrapers for cleaning belt bands, comprising a support strip (2) which is hollow section in form and abrasion parts (3) which are mounted on it and which rest against the moving belt band in the cleaning position, in which the support strip (2) is fitted with insert pockets (4) to take push-in bases (5) which are fitted to the abrasion parts (3), characterized in that the abrasion parts (3) are designed in the form of abrasion strips which are roughly S-shaped in section with straight profile areas (3b), in which a free end forms the other insert base or bases (5) and that, when inserted, the centre area (3a) of the abrasion strip (3) relative to the surface of the support strip (2) forms an angle (α) originating from the insert pocket to provide a spring arc.

2. Stripping edge according to Claim 1,
characterized in that
the side of the hollow section of support strip facing the insert pockets (4) has a protective plate (10) extending towards the abrasion strips (3).

3. Stripping edge according to Claim 1 or 2,
characterized in that
in order to maintain an initial tension, there are inserted inside the abrasion strips (3) spring plates (7) which extend at least from the push-in bases (5) through the centre profile area (3a) into the abrasion strip area (3b).

4. Stripping edge according to one of the foregoing Claims,
characterized in that
a number of push-in bases (5) are arranged one beside the other on an abrasion strip (3).

5. Stripping edge according to one of the foregoing Claims,
characterized in that
a number of abrasion strips (3) fitted with push-in bases (5) are arranged side by side on a support strip (2).

6. Stripping edge according to one of the foregoing Claims,
characterized in that
the support strip (2) is designed so that it has symmetrically equal rims, with insert pockets (4, 4a) on two opposite longitudinal sides.

7. Stripping edge according to one of the foregoing Claims,
characterized in that
the abrasion strips (3c, 3d) are provided back and/or front with protective aprons (11 and 12 respectively).

## Revendications

1. Barrette de raclage pour des racleurs de bande destinés à nettoyer des bandes de courroie, comportant une barre de support (2) formée par un profilé creux, et des éléments d'usure (3) fixés sur celle-ci et en appui, dans la position de nettoyage, contre la bande de courroie en déplacement, ladite barre de support (2) étant pourvue de poches à enfichage (4) pour recevoir des pieds enfichables (5) prévus sur les éléments d'usure (3), caractérisée en ce que les éléments d'usure (3) sont réalisés sous forme de barres d'usure d'une section transversale approximativement en fonne de S et présentant des régions profilées droites (3b), dans laquelle une extrémité libre forme le ou les pieds enfichables (5), et en ce qu'à l'état enfiché, la région médiane (3a) de la barre d'usure (3) forme un angle (a) par rapport à la surface de la barre de support (2), qui part depuis la poche à enfichage pour réaliser un arc élastique.

2. Barrette de raclage selon la revendication 1, caractérisée en ce que le côté du profilé creux de barre de support, qui se trouve en vis-à-vis des poches à enfichage (4), présente une plaque protectrice (10) dirigée en direction des barres d'usure (3).

3. Barrette de raclage selon l'une ou l'autre des revendications 1 et 2, caractérisée en ce qu'il est prévu, à l'intérieur des barres d'usure (3), des tôles élastiques (7) dirigées depuis les pieds enfichables (5) par-dessus la région profilée médiane (3a) jusque dans la région de barre d'usure (3b) pour maintenir une précontrainte.

4. Barrette de raclage selon l'une quelconque des revendications précédentes, caractérisée en ce qu'une pluralité de pieds enfichables (5) sont réalisés les uns à côté des autres sur la barre d'usure (3).

5. Barrette de raclage selon l'une quelconque des revendications précédentes, caractérisée en ce que sur la barre de support (2), une pluralité de barres d'usure (3) équipées de pieds enfichables (5) sont agencées les unes à côté des autres.

6. Barrette de raclage selon l'une quelconque des revendications précédentes, caractérisée en ce que la barre de support (2) est réalisée de manière égale par symétrie plane, avec des poches à enfichage (4, 4a) sur deux côtés longitudinaux opposés.

7. Barrette de raclage selon l'une quelconque des revendications précédentes, caractérisée en ce que les barres d'usure (3c, 3d) sont pourvues de tabliers protecteurs amère et/ou frontaux (11 ou 12).
